# FASCICULE DE BREVET EUROPEEN

(11) **EP 0 296 011 B1**
(45) Date de publication et mention de la délivrance du brevet: **25.08.1993**
(21) Numéro de dépôt: 88401350.9
(22) Date de dépôt: 03.06.1988
(51) Int. Cl.: G08B 13/18, H04H 9/00, G07C 9/00

(54) **Procédé et dispositif de détermination du nombre de personnes présentes dans un espace déterminé**
Verfahren und Vorrichtung zur Bestimmung der Zahl der in einem bestimmten Raum anwesenden Personen
Method and device for determining the number of persons present in a determined room

(30) Priorité: 05.06.1987 FR 8707922
(43) Date de publication de la demande: 21.12.1988
(73) Titulaire: BERTIN & CIE, F-78373 Plaisir Cédex (FR)
(72) Inventeur: Fardeau, Michel, F-13290 Les Milles (FR); Guern, Yves, F-83470 Pourrieres (FR); Dignac, Jean-Pierre, F-13880, Velaux (FR); Drevon, Jean-Marc, F-13770 Venelles (FR)
(74) Mandataire: Ramey, Daniel

(56) Documents cités:
- EP-A- 0 017 821
- FR-A- 2 417 222
- GB-A- 2 146 152
- GB-A- 2 158 324
- GB-A- 2 180 642
- US-A- 3 851 096
- US-A- 4 258 351

## Description

L'invention concerne un procédé et un dispositif de détermination du nombre de personnes présentes dans un espace déterminé, et est applicable aussi bien à des sondages d'audience pour la télévision qu'à la surveillance automatique de locaux.

On connaît déjà des appareils utilisés pour les sondages d'audience de télévision, qui sont associés à un poste de télévision et qui sont capables d'enregistrer la mise en marche et l'arrêt du poste de télévision, ainsi que le canal sélectionné, ce qui, en combinaison avec l'heure exacte donnée par une base de temps, permet de déterminer précisément les programmes choisis. Un ordinateur central permet d'interroger, par le réseau téléphonique, les appareils de ce genre associés à des postes de télévision et donc d'effectuer automatiquement des sondages sur les choix des téléspectateurs et le succès des émissions proposées par les différentes chaînes de télévision. Cependant, ces appareils connus ne permettent pas d'obtenir des informations sur le nombre de personnes qui regardent l'émission diffusée par un poste de télévision, ni même de savoir, lorsqu'un poste de télévision fonctionne, si quelqu'un est devant le poste pour regarder la télévision.

On connaît également des dispositifs, utilisés en général pour la surveillance de locaux à des fins de sécurité, qui utilisent des détecteurs à ultra-son ou à effet Doppler et qui donnent une information sur la présence ou l'absence de personnes dans un local déterminé. Ces dispositifs connus ne permettent pas toutefois pas de connaître le nombre de personnes présentes. Il faut pour cela utiliser des moyens de comptage des personnes passant par l'entrée et par la sortie d'une pièce. Cela nécessite toutefois de séparer le flux d'entrée dans la pièce et le flux de sortie de la pièce, et d'initialiser le comptage. En outre, de tels moyens ne seraient pas suffisants pour réaliser des sondages automatiques d'écoute de la télévision, car il ne suffit pas de vérifier la présence d'une personne dans une pièce où se trouve un poste de télévision pour être assuré qu'elle regarde une émission.

On connaît de plus , par le document FR-A-2 417 222, un dispositif de surveillance de locaux, comprenant un objectif formant une image d'un espace déterminé sur une matrice de photodétecteurs CCD associés à des circuits de pilotage et de lecture, qui sont reliés par un convertisseur analogique-numérique à des circuits d'établissement des différences entre les signaux fournis par les photodétecteurs dans deux images successives et de comparaison de ces différences à un seuil, permettant d'éliminer le bruit de fond des photodétecteurs. Le signal résultant est ensuite transmis à un circuit d'alarme. Il est prévu également de faire varier la fréquence de lecture des photodétecteurs, pour éviter leur saturation. Ce dispositif est capable de détecter des mouvements dans un espace déterminé, mais ne permet pas de compter les personnes présentes dans cet espace.

La présente invention a notamment pour but de pallier les inconvénients précités des dispositifs connus.

Elle a pour objet un procédé et un dispositif permettant de déterminer le nombre de personnes dans une pièce et, en particulier le nombre de personnes suivant une émission sur un poste de télévision.

Elle propose à cet effet un procédé de détermination du nombre de personnes présentes dans un espace déterminé, consistant à former une image de cet espace sur un ensemble de photodétecteurs, à relever avec une fréquence de lecture déterminée les niveaux de gris produits par chacun des photodétecteurs, pour chaque photodétecteur à comparer entre eux les niveaux de gris de deux images successives pour obtenir leur différence et à comparer ces différences à un seuil, caractérisé en ce qu'il consiste à déterminer la valeur du seuil pour chaque photodétecteur en fonction du niveau d'éclairement de ce photodétecteur, à transformer les différences précitées en signaux binaires par redressement et comparaison aux seuils précités, à éliminer les signaux binaires de dimension trop faible pour correspondre à une personne, les signaux non éliminés formant un premier résultat, à comparer entre eux des premiers résultats obtenus sur une période de temps prédéterminée pour obtenir un résultat d'ensemble correspondant à des mouvements de personnes, et à en déduire le nombre de personnes présentes dans ledit espace.

Le procédé selon l'invention permet, non seulement de connaître le nombre de personnes présentes dans un espace déterminé à un moment donné, mais encore de connaître les variations de ce nombre et les allées et venues des personnes présentes. L'espace en question peut être un local à surveiller, ou bien la partie d'une pièce qui est située en face d'un poste de télévision et où les personnes sont susceptibles de se tenir pour regarder la télévision.

Selon une autre caractéristique de l'invention, le procédé consiste également à faire varier la fréquence de lecture des photodétecteurs en fonction de l'intensité d'éclairage de l'espace déterminé, pour obtenir dans chaque image un niveau de gris moyen sensiblement indépendant des conditions d'éclairage.

On évite ainsi la saturation des photodétecteurs et on facilite la comparaison des images entre elles.

Le procédé selon l'invention consiste également à enregistrer les images précitées à une fréquence qui est un sous-multiple de la fréquence de lecture, et à comparer entre elles deux à deux des images successives séparées l'une de l'autre par un nombre déterminé d'images enregistrées, pour obtenir les différences précitées des niveaux de gris.

Le procédé consiste également à faire varier la fréquence d'enregistrement des images et/ou le nombre d'images séparant deux images comparées en fonction de la vitesse de déplacement d'une personne.

Le procédé s'adapte ainsi automatiquement aux évolutions des personnes dans une pièce ou un local.

Enfin, le procédé consiste également à comparer entre eux des résultats d'ensemble obtenus sur différentes périodes de temps.

L'invention propose également un dispositif pour la détermination du nombre de personnes présentes dans un espace déterminé, comprenant un objectif formant une image de cet espace sur un ensemble de photodétecteurs, et des circuits de pilotage et de lecture des photodétecteurs, reliés par un convertisseur analogique-numérique à des moyens d'établissement des différences entre les signaux fournis par les photodétecteurs dans deux images successiver et de comparaison des différences à un seuil, caractérisé en ce que le convertisseur analogique-numérique est relié à des moyens de traitement de l'information, tels qu'un microcalculateur, comprenant également des moyens de détermination du seuil pour chaque photodétecteur en fonction de l'éclairement du photodétecteur, des moyens de transformation en signaux binaires des différences précitées, par comparaison des valeurs absolues de ces différences aux seuils précités, des moyens de filtrage pour éliminer les signaux binaires de dimension trop faible pour correspondre à une personne et pour obtenir un premier résultat constitué par les signaux binaires non éliminés, des moyens de comparaison entre eux de premiers résultats successifs sur une période de temps déterminée pour l'obtention d'un résultat d'ensemble correspondant à des mouvements de personnes, et des moyens de détermination du nombre de personnes présentes à partir du résultat d'ensemble. Selon une autre caractéristique de l'invention, les moyens de traitement de l'information comprennent également des moyens de comparaison entre eux de résultats d'ensemble obtenus sur des périodes de temps différentes.

Dans un mode de réalisation préféré de l'invention, les moyens de traitement de l'information comprennent également :
- des moyens de détermination de la fréquence de lecture des photodétecteurs en fonction de l'intensité d'éclairage dudit espace,
- des moyens d'enregistrement des signaux lus et numérisés, à une fréquence qui est un sous-multiple de la fréquence de lecture des photodétecteurs,
- et des moyens pour comparer deux à deux les signaux enregistrés successifs séparés l'un de l'autre par un nombre déterminé de signaux enregistrés et pour effectuer leur différence.

Un tel dispositif peut être associé à un poste de télévision pour la réalisation de sondages automatiques d'audience, ou bien à un système de surveillance de locaux.

L'invention sera mieux comprise et d'autres détails, caractéristiques et avantages de celle-ci apparaitront au cours de la description explicative qui va suivre, faite à titre d'exemple en référence aux dessins annexés, dans lesquels :
- la figure 1 représente schématiquement un dispositif selon l'invention;
- la figure 2 illustre schématiquement un mode de traitement des signaux des photodétecteurs;
- la figure 3 représente schématiquement le déroulement dans le temps des étapes essentielles du procédé selon l'invention.

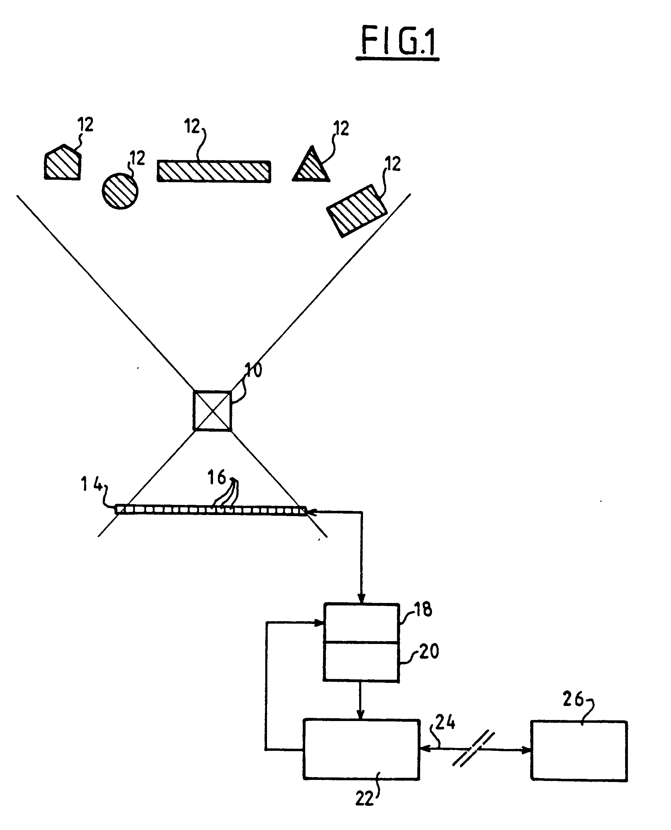

On se réfère d'abord à la figure 1, représen tant les composants essentiels d'un dispositif selon l'invention.

Ce dispositif comprend un objectif 10, tel qu'un objectif d'appareil photographique ou de caméra vidéo, dans le champ d'observation duquel peuvent se trouver des objets et des personnes 12.

L'objectif 10 est associé à une barrette ou rangée 14 de photodétecteurs élémentaires 16, tels que des photodétecteurs à transfert de charge, qui peuvent être par exemple au nombre de 512 ou de 1 024. L'objectif 10 forme sur la barrette 14 de photodétecteurs 16 l'image d'un plan de l'espace compris dans son champ d'observation, ce plan correspondant au plan du dessin de la figure 1.

Les photodétecteurs 16 de la barrette 14 sont associés à des circuits désignés généralement par la référence 18, qui comprennent des circuits de lecture des charges des détecteurs 16 et au moins une horloge de détermination du temps d'intégration ou de la fréquence de lecture des photodétecteurs 16. Les circuits de lecture sont reliés par un convertisseur analogique-numérique 20 à un microcalculateur 22 effectuant le traitement des signaux de sortie des photodétecteurs 16, et la commande des circuits 18. Ce microcalculateur 22 peut être interrogé, par exemple par l'intermédiaire du réseau téléphonique 24, par un calculateur ou une unité centrale 26 située à distance.

Lorsque l'invention est appliquée à la réalisation de sondages automatiques d'écoute, le dispositif selon l'invention est associé à un poste de télévision et est agencé pour former sur la barrette 14 de photodétecteurs l'image d'une zone plate sensiblement horizontale située à environ 1 m au-dessus du sol, ce qui correspond à la hauteur de la partie supérieure du corps d'un personne assise devant un poste de télévision.

Lorsque l'invention est appliquée à la surveillance de locaux, le dispositif peut comprendre une matrice de photodétecteurs, ce qui permet de ne pas limiter l'analyse à une seule dimension.

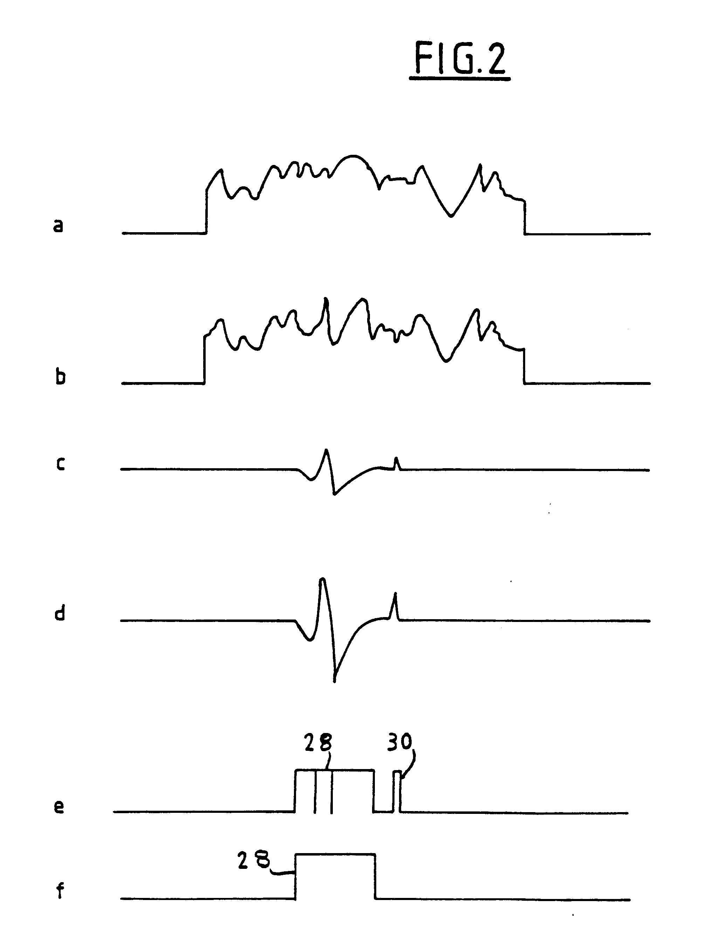

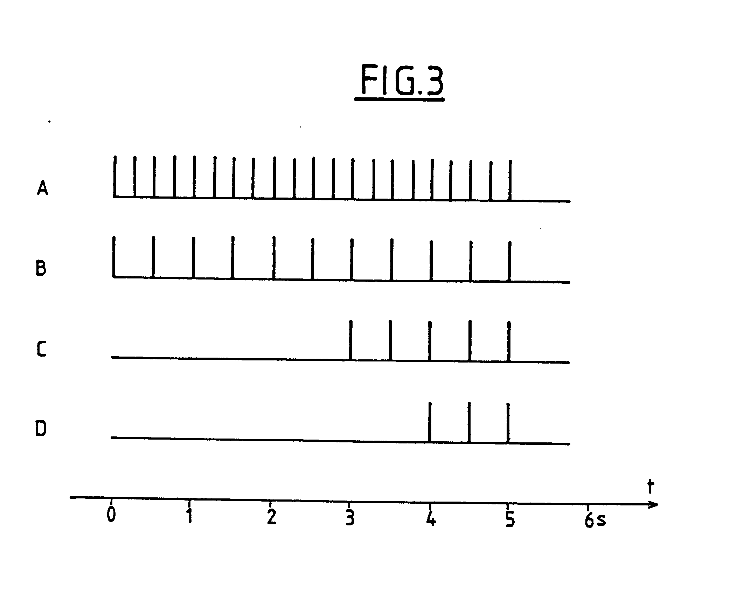

On va maintenant décrire les principales étapes du procédé selon l'invention, ainsi que le fonctionnement du dispositif, en référence aux figures 2 et 3.

Les courbes a et b de la figure 2 représentent les signaux vidéo obtenus par lecture des photodétecteurs élémentaires 16 de la barrette 14 à deux instants qui sont séparés d'un intervalle de temps prédéterminé.

Chaque courbe a, b représente les niveaux de gris qui sont vus par les différents photodétecteurs. Lorsque la scène observée n'a pas changé entre les deux instants d'observation, et que l'éclairage n'a pas non plus varié, les courbes a et b sont identiques. Par contre, lorsqu'une personne faisant partie de la scène observée a bougé, même légèrement, son mouvement se traduit par une variation des niveaux de gris vus par les photodétecteurs correspondants. La détection des variations des niveaux de gris vus par les photodétecteurs permet donc de mettre en évidence le mouvement d'une personne, et par là même, de reconnaître la présence d'une personne et de la différencier des autres personnes faisant partie de la même scène observée. Corollairement, on détermine ainsi le nombre de personnes faisant partie de la scène. Il est en effet impossible en pratique qu'une personne puisse rester parfaitement immobile, sans même respirer, pendant plus de quelques secondes.

Le traitement des signaux vidéo fournis par la barrette 14 de photodétecteurs est, pour l'essentiel, le suivant : deux signaux successifs tels que ceux représentés par les courbes a et b, sont comparés, et leur différence est effectuée pour obtenir le signal représenté par la courbe c. Ce signal est amplifié (courbe d) puis est redressé et transformé en signaux binaires par comparaison à un seuil déterminé, permettant d'éliminer le bruit résiduel des photodétecteurs 16. Le grain d'amplification est réglé en fonction de l'intensité d'éclairage relevée lors des précédentes lectures, et pour chaque point considéré, le seuil est fonction de l'éclairement en ce point. Le signal résultant, représenté par le courbe e comprend un premier créneau ou écho 28, de largeur relativement important, et un second créneau ou écho 30, de largeur beaucoup plus faible. Ce signal est ensuite appliqué à un filtre, pour ne conserver que le premier écho 28 (courbe f) qui correspond à une personne, et pour éliminer le second écho 30, dont la longuer est beaucoup trop faible pour correspondre à une personne et qui peut être dû par exemple à une variation locale d'éclairage (allumage ou extinction d'une lampe) ou au mouvement d'une main ou d'un objet tenu par une personne.

De façon plus détaillée, le déroulement dans le temps des diverses opérations du procédé selon l'invention peut être le suivant (figure 3) :
La fréquence de lecture des photodétecteurs de la barette 14 est déterminée par le microcalculateur 22 en fonction de l'intensité de l'éclairage de la scène observée, de façon à éviter toute saturation des photodétecteurs et pour que le niveau de gris moyen vu par les photodétecteurs soit sensiblement constant et indépendant des conditions d'éclairage. En pratique, la fréquence de lecture des photodétecteurs peut varier de une à dix lectures (ou davantage) par seconde. La série de lectures des photodétecteurs pendant un intervalle de temps donné de 5 à 6 s est représentée par la partie A de la figure 3 où l'on voit que la fréquence de lecture est de l'ordre de 4 par seconde.

Les signaux lus par le circuit 18 et numérisés par le convertisseur 20 sont enregistrés par le microcalculateur 22 à une fréquence qui est au plus égale à la fréquence de lecture et qui est le plus souvent un sous-multiple de cette fréquence de lecture. La partie B de la figure 3 représente la phase d'enregistrement des signaux numérisés et l'on voit dans cet exemple qu'un signal est enregistré toutes les demi-secondes, ce qui revient à dire que seul un signal numérisé sur deux est enregistré.

La phase suivante consiste à comparer entre eux deux signaux enregistrés successifs qui sont séparés l'un de l'autre par un intervalle de temps prédéterminé, ou par un nombre prédéterminé de signaux enregistrés, et à effectuer la différence des deux signaux comparés. Cette phase est représentée par la partie C de la figure 3 dans le cas où les signaux enregistrés et comparés sont séparés l'un de l'autre par un intervalle de 3 secondes. En d'autres termes, le premier signal enregistré à l'instant 0 est comparé 3 s plus tard au signal qui vient d'être enregistré et leur différence est traitée comme décrit en référence à la figure 2 (amplification, redressement, transformation en signaux binaires et filtrage) pour donner un signal de résultat qui est enregistré à l'instant t = 3 s (partie C de la figure 3). Le signal enregistré au temps t = 0,5 s est comparé au signal enregistré au temps t = 3,5 s, et ainsi de suite.

L'étape suivante consiste à comparer entre eux un nombre variable de résultats, pour éliminer les résultats aberrants qui peuvent être dûs au passage rapide d'une personne devant le poste de télévision, à la superposition temporaire des images de deux personnes, etc.... Cette phase est représentée par la partie D de la figure 3, dans le cas où trois résultats successifs sont comparés entre eux. Le résultat de cette comparaison est enregistré à l'instant t = 4 s.

Il résulte du déroulement dans le temps de ces différentes phases que le résultat final est obtenu 4 s après le premier événement pris en compte. Ce retard est connu, puisqu'il est déterminé par la fréquence de lecture des photodétecteurs, la fréquence d'enregistrement des signaux lus et numérisés, le choix de l'intervalle de temps séparant deux signaux comparés et le nombre de résultats successifs à comparer entre eux, et peut donc être pris en compte par le microcalculateur qui indiquera, pour chaque résultat, l'instant précis correspondant à ce résultat.

Le microcalculateur permet en outre de régler la fréquence d'enregistrement des signaux numérisés et l'intervalle de temps séparant deux signaux comparés en fonction de la vitesse détectée de déplacement d'une personne dans la scène observée. Il est évident que, lorsque des personnes sont assises devant un poste de télévision, leurs mouvements sont en général relativement lents, et l'intervalle de temps entre deux signaux enregistrés à comparer doit être au moins de 2 à 3 s, pour que la différence entre ces deux signaux ne soit pas sensiblement nulle et permette de déterminer le nombre des personnes présentes. Par contre, lorsque les personnes sont en mouvement rapide dans un local, cet intervalle de temps entre les signaux comparés doit être réduit, et la fréquence d'enregistrement des signaux peut être augmentée.

La procédé selon l'invention est exécuté par le microcalculateur sous commande d'un logiciel comprenant un ensemble de programmes dont les fonctions essentielles sont les suivantes :
- acquisition des signaux fournis par les photodétecteurs de la barrette;
- comparaison de ces signaux deux à deux pour déterminer leur différence en chaque point, comparaison de la différence à un seuil fonction du niveau d'énergie du photodétecteur considéré (les comparaisons sont faites par exemple entre un signal et les signaux le précédant de 0,1 seconde, 1 seconde, 2 secondes, 3 secondes et 4 secondes), et obtention de signaux de résultat.
- comparaison entre eux de signaux successifs de résultat pour vérification de leur continuité et détermination d'un résultat d'ensemble sur une période donnée, par exemple d'une seconde.
- comparaison des résultats ainsi déterminés, sur des périodes variables, par exemple de 3, 5, 10 ou 15 secondes ou davantage, ces périodes variant en fonction de la qualité des résultats (probabilité de l'information correspondante), et obtention de conclusions sur les mouvements des personnes entrant et sortant du champ d'observation de la barrette de photodétecteurs et sur le nombre de personnes présentes;
- présentation et affichage des résultats.

Les annexes A, B et C sont les parties essentielles de programmes correspondant respectivement à l'acquisition des signaux, à la détermination du gain d'amplification et à l'affichage des résultats (les autres programmes sont essentiellement des comparaisons de signaux, dont l'écriture ne pose pas de problèmes à l'homme du métier).

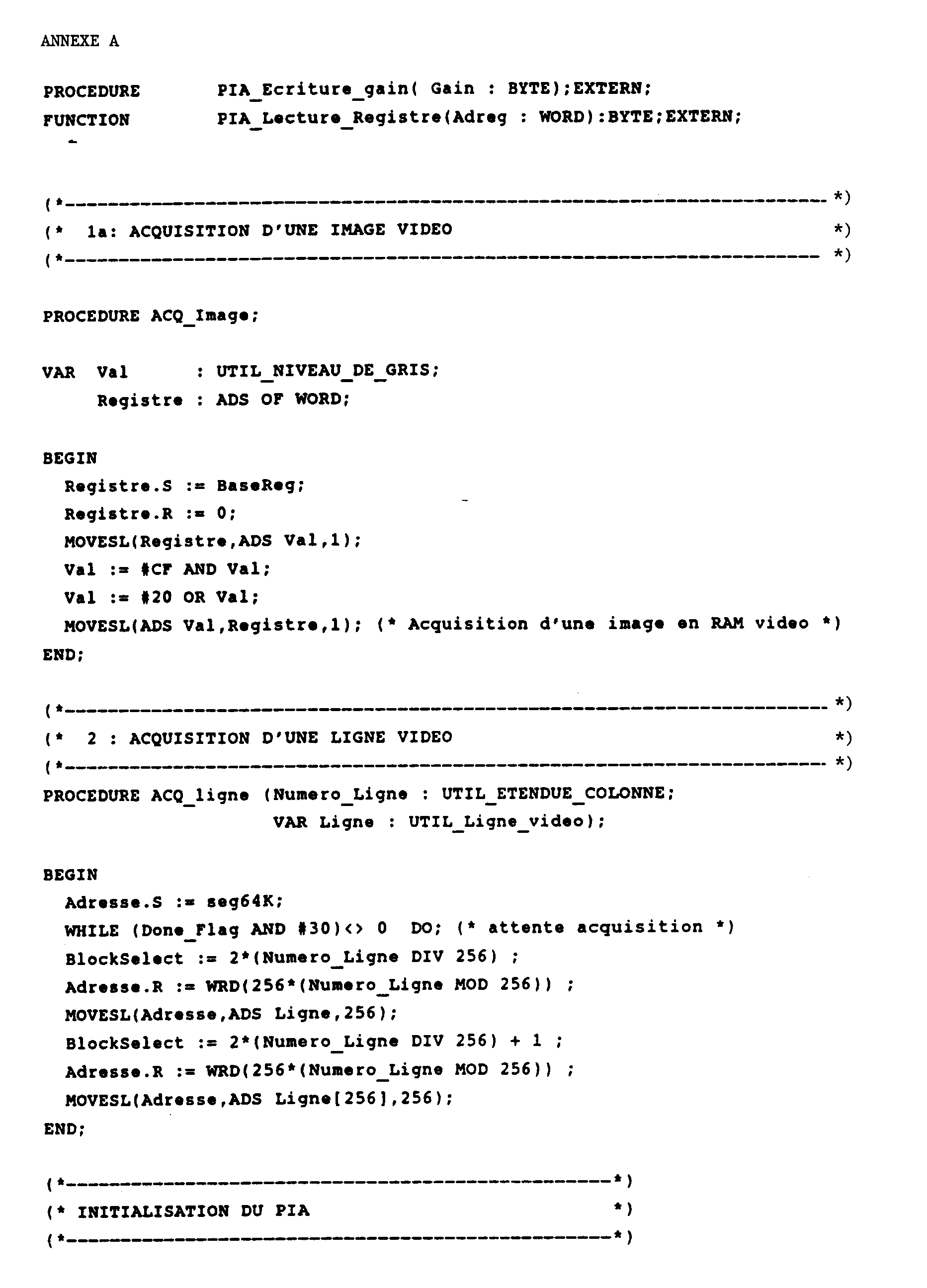

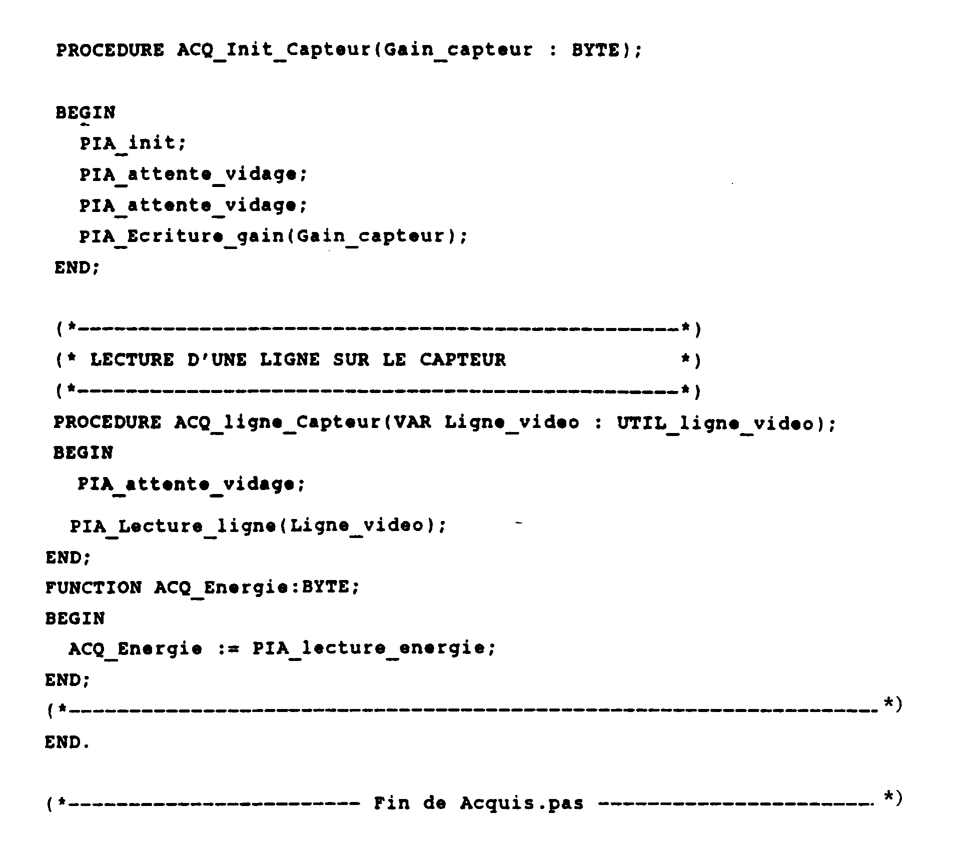

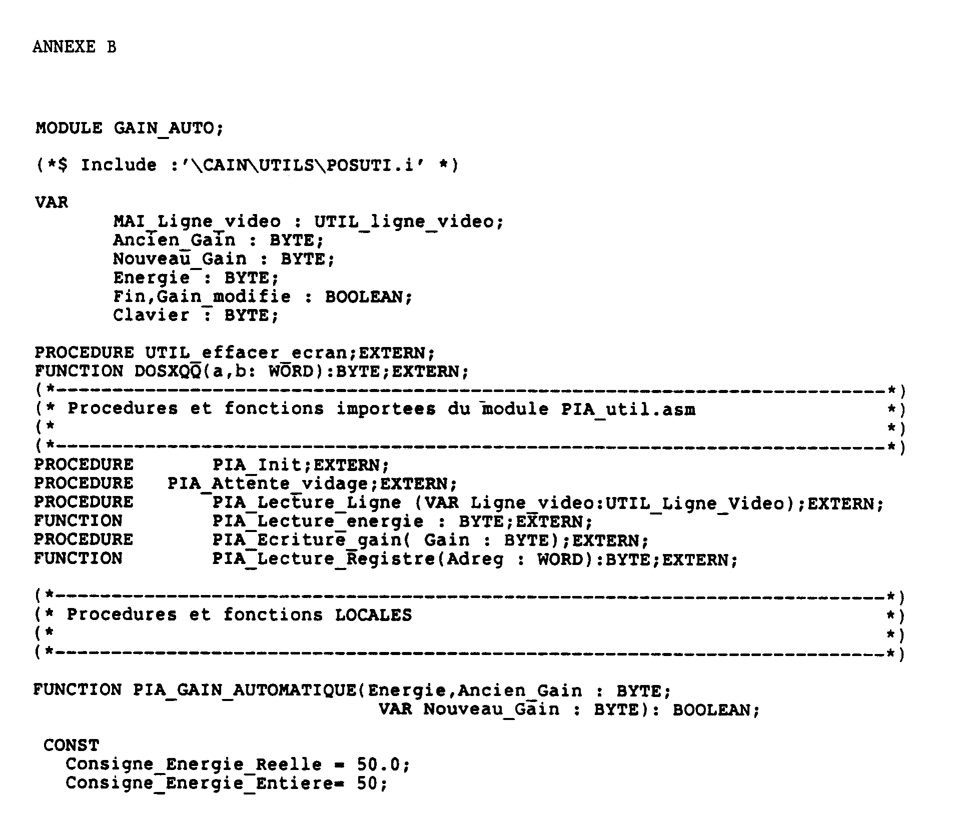

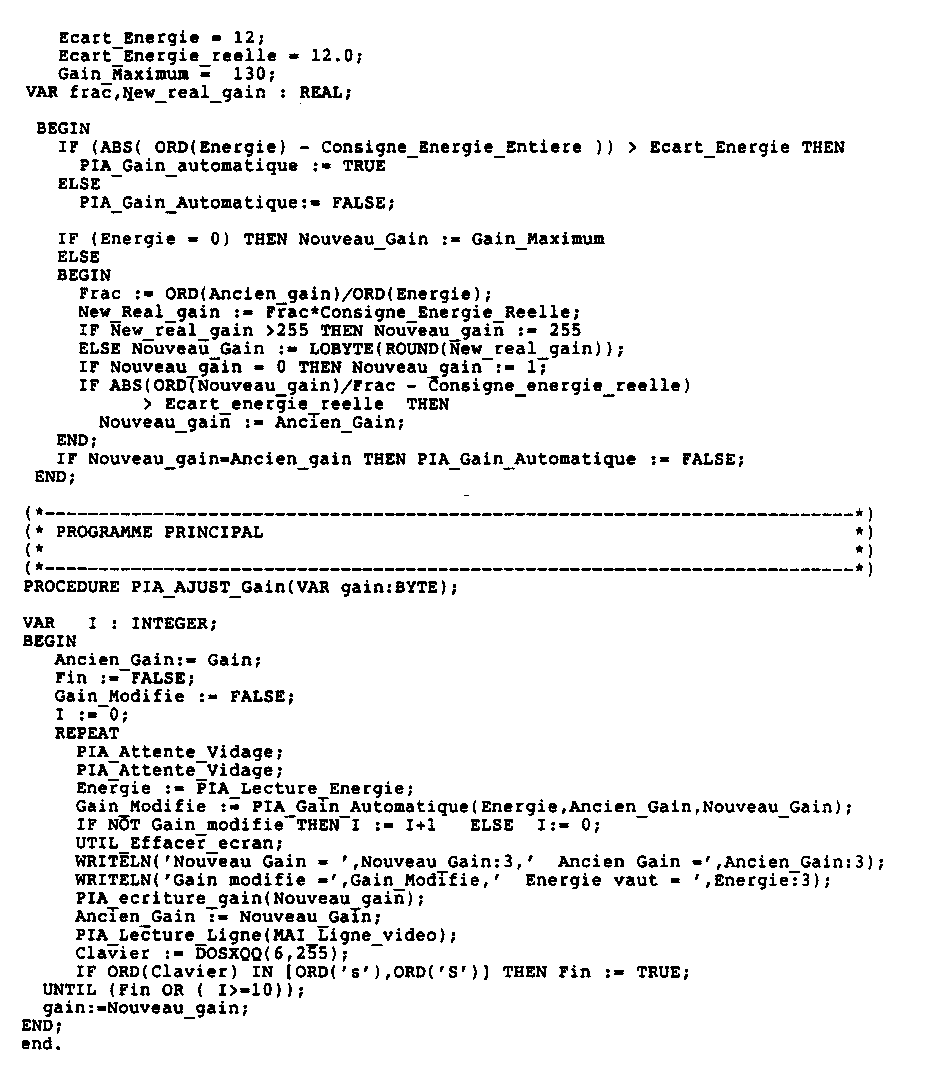

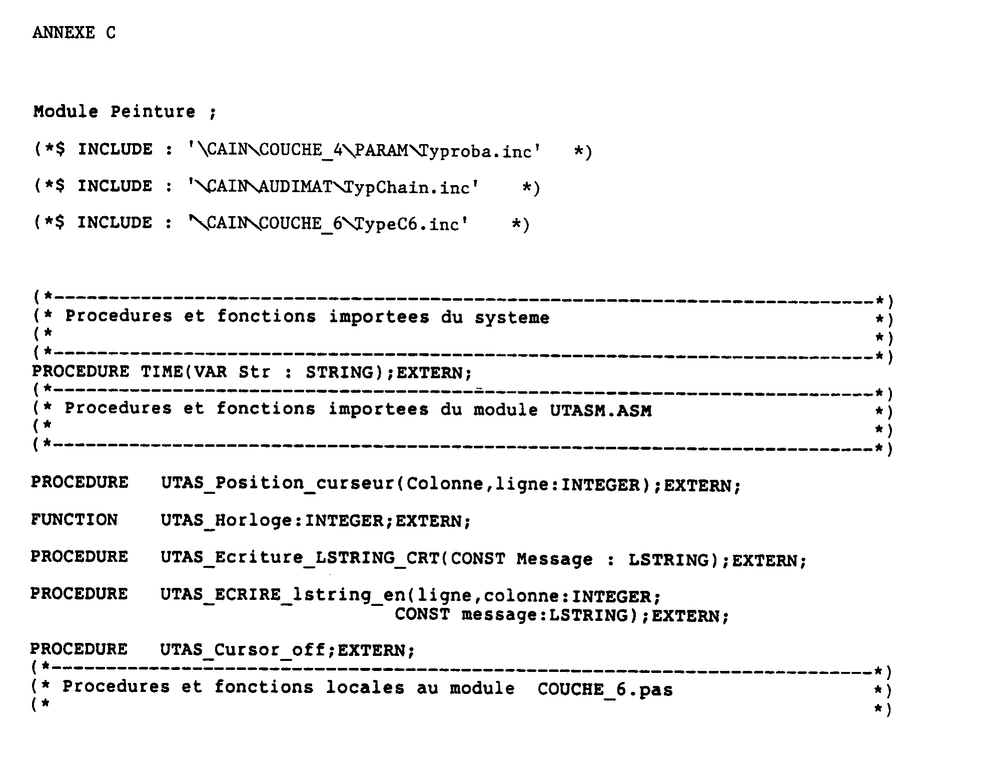

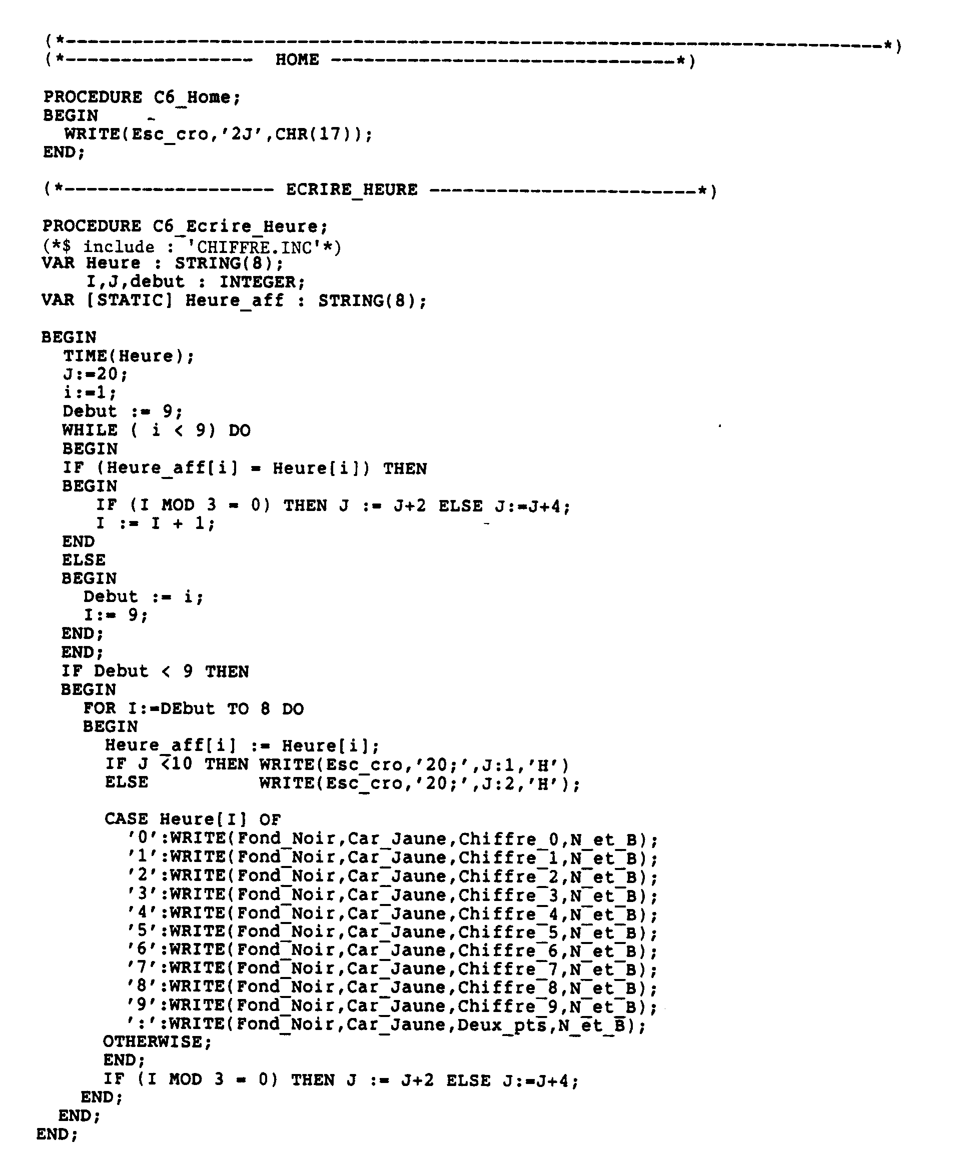

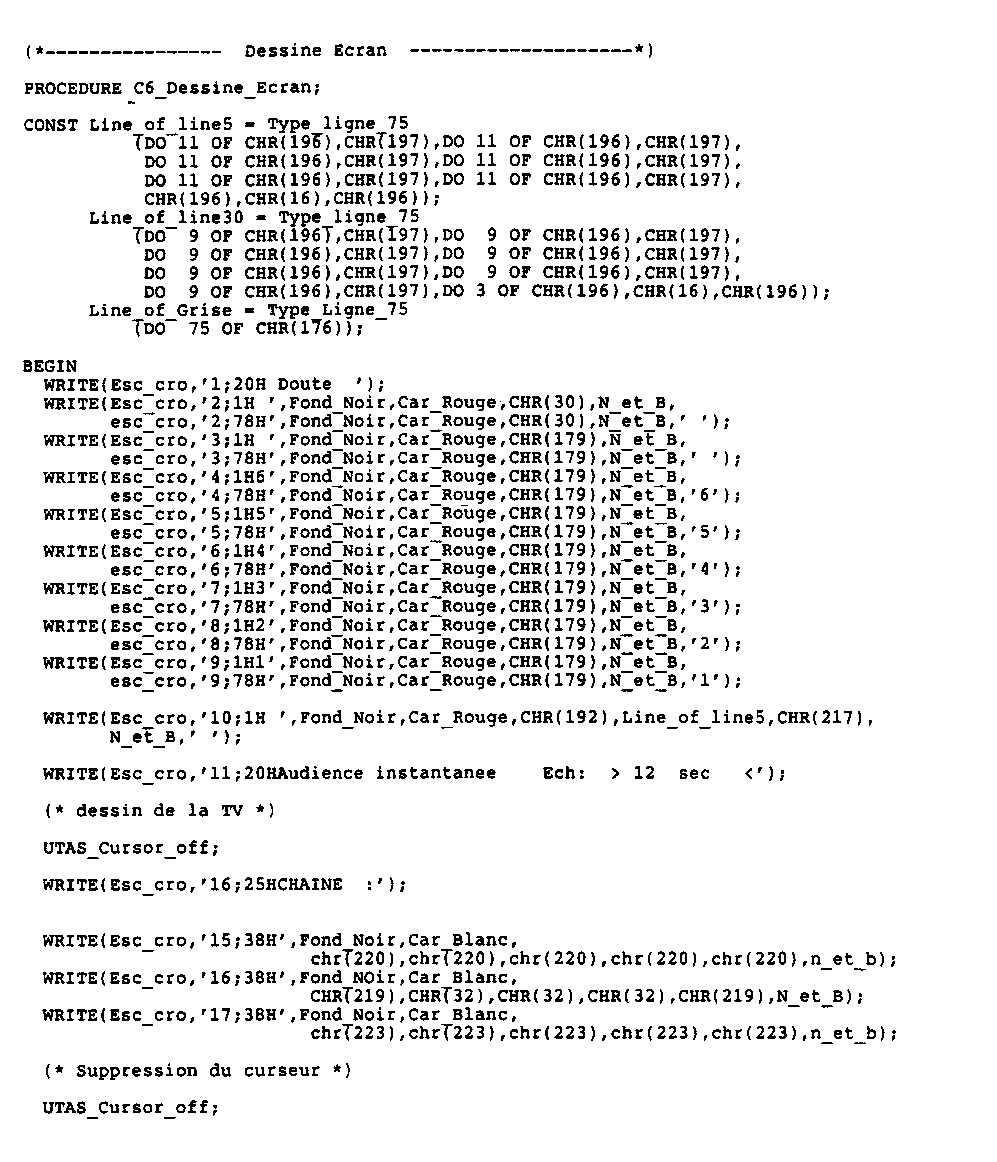

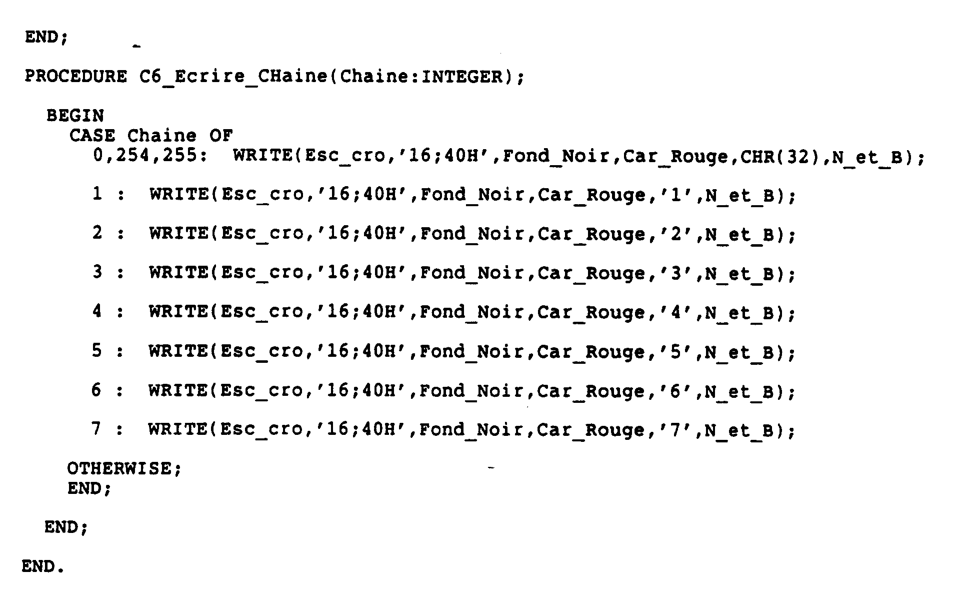

## Revendications

1. Procédé de détermination du nombre de personnes présentes dans un espace déterminé, consistant à former une image de cet espace sur un ensemble (14) de photodétecteurs (16), à relever avec une fréquence de lecture déterminée les niveaux de gris produits par chacun des photodétecteurs, pour chaque photodétecteur comparer entre eux les niveaux de gris de deux images successives pour obtenir leur différence, et à comparer ces différences à un seuil, caractérisé en ce qu'il consiste à déterminer la valeur du seuil pour chaque photodétecteur en fonction du niveau d'éclairement de ce photodétecteur, à transformer les différences précitées en signaux binaires par redressement et comparaison aux seuils précités, à éliminer les signaux binaires de dimension trop faible pour correspondre à une personne, les signaux non éliminés formant un premier résultat, à comparer entre eux des premiers résultats obtenus sur une période de temps prédéterminée pour obtenir un résultat d'ensemble correspondant à des mouvements de personnes, et à en déduire le nombre de personnes présentes dans ledit espace.

2. Procédé selon la revendication 1, caractérisé en ce qu'il consiste également à comparer entre eux des résultats d'ensemble obtenus sur différentes périodes de temps.

3. Procédé selon la revendication 1 ou 2, caractérisé en ce qu'il consiste à faire varier la fréquence de lecture des photodétecteurs (16) en fonction de l'intensité d'éclairage dudit espace pour obtenir dans chaque image un niveau de gris moyen sensiblement indépendant des conditions d'éclairage.

4. Procédé selon l'une des revendications précédentes, caractérisé en ce qu'il consiste à enregistrer les images précitées à une fréquence qui est un sous-multiple de la fréquence de lecture, et à comparer deux images successives séparées l'une de l'autre par un nombre déterminé d'images enregistrées, pour obtenir les différences précitées des niveaux de gris.

5. Procédé selon la revendication 4, caractérisé en ce qu'il consiste à faire varier la fréquence d'enregistrement des images et/ou le nombre d'images séparant deux images comparées, en fonction de la vitesse de déplacement d'une personne dans ledit espace.

6. Procédé selon une des revendications 1 à 5, caractérisé en ce qu'il consiste à filtrer les signaux binaires pour éliminer les signaux de dimension trop faible pour correspondre à une personne.

7. Procédé selon l'une des revendications précédentes, caractérisé en ce qu'il est appliqué à la détermination du nombre de personnes regardant un poste de télévision, ou à la surveillance de locaux.

8. Dispositif pour la détermination du nombre de personnes présentes dans un espace déterminé, comprenant un objectif (10) formant une image de cet espace sur un ensemble (14) de photodétecteurs (16) et des circuits (18) de pilotage et de lecture des photodétecteurs, reliés par un convertisseur analogique-numérique (20) à des moyens d'établissement des différences entre les signaux fournis par les photodétecteurs dans deux images successives et de comparaison des différences à un seuil, caractérisé en ce que le convertisseur analogique-numérique (20) est relié à des moyens (20) de traitement de l'information, tels qu'un microcalculateur, comprenant également des moyens de détermination du seuil pour chaque photodétecteur en fonction de l'éclairement du photodétecteur, des moyens de transformation en signaux binaires des différences précitées, par comparaison des valeurs absolues de ces différences aux seuils précités, des moyens de filtrage pour éliminer les signaux binaires de dimension trop faible pour correspondre à une personne et pour obtenir un premier résultat constitué par les signaux binaires non éliminés, des moyens de comparaison entre eux de premiers résultats successifs sur une période de temps déterminée pour l'obtention d'un résultat d'ensemble correspondant à des mouvements de personnes, et des moyens de détermination du nombre de personnes présentes à partir du résultat d'ensemble.

9. Dispositif selon la revendication 8, caractérisé en ce que les moyens (22) de traitement de l'information comprennent également des moyens de comparaison entre eux de résultats d'ensemble obtenus sur des périodes de temps différentes.

10. Dispositif selon la revendication 8 ou 9, caractérisé en ce que les moyens (22) de traitement de l'information comprennent des moyens de détermination de la fréquence de lecture des photodétecteurs (16) en fonction de l'intensité d'éclairage dudit espace.

11. Dispositif selon l'une des revendications 8 à 10, caractérisé en ce que les moyens (22) de traitement de l'information comprennent des moyens d'enregistrement des signaux lus et numérisés, à une fréquence qui est un sous-multiple de la fréquence de lecture des photodétecteurs (16), et des moyens pour comparer deux à deux des signaux enregistrés successifs séparés l'un de l'autre par un nombre déterminé de signaux enregistrés et pour effectuer leur différence.

12. Dispositif selon l'une des revendications 8 à 11, caractérisé en ce qu'il est associé à un poste de télévision pour la détermination du nombre de personnes regardant ce poste, ou à un système de surveillance de locaux.

13. Dispositif selon l'une des revendications 8 à 12, caractérisé en ce que l'ensemble de photodétecteurs (16) est une barrette comprenant une rangée de photodétecteurs.

## Claims

1. A method of determining the number of people present in a determined space, consisting in forming an image of said space on a set (14) of photodetectors (16), in reading the gray levels produced by each photodetector at a determined read frequency, in mutually comparing, for each photodetector, the gray levels in two successive images in order to obtain the difference, and in comparing these differences with a threshold, the method being characterized in that it consists in determining the threshold value for each photodetector as a function of the photodetector's illumination level, in converting the above-specified differences into binary signals by rectifying them and comparing them with the above-specified thresholds, in eliminating binary signals which are too small in size to correspond to a person, the signals which are not eliminated forming a first result, in mutually comparing the first results obtained over a predetermined period of time in order to obtain an overall result corresponding to the movements of people, and in deducing the number of people present in the said space.

2. A method according to claim 1, characterized in that it also consists in mutually comparing the overall results obtained over different time periods.

3. A method according to claim 1 or 2, characterized in that it consists in varying the frequency at which the photodetectors (16) are read as a function of the intensity with which the space is illuminated in order to obtain a mean image gray level which is substantially independent of lighting conditions.

4. A method according to any preceding claim, characterized in that it consists in recording the above-specified images at a frequency which is a submultiple of the read frequency, and in comparing pairs of successive images which are separated from each other by a determined number of recorded images in order to obtain the above-specified differences between the gray levels.

5. A method according to claim 4, characterized in that it consists in varying the frequency at which images are recorded and/or the number of image separating two compared images as a function of the speed of displacement of a person in the said space.

6. A method according to any one of claims 1 to 5, characterized in that it consists in filtering the binary signals in order to eliminate signals which are too small to correspond to a person.

7. A method according to any preceding claim, characterized in that it is used for determining the number of people watching a television set, or for premises surveillance.

8. A device for determining the number of people present in a determined space, the device comprising an objective lens (10) forming an image of said space on a set (14) of photodetectors (16), and circuits (18) for controlling and reading the photodetectors, connected by an analog-to-digital converter (20) to means for establishing the differences between the signals supplied by the photodetectors in two successive images and for comparing these differences with a treshold, characterized in that the analog-to-digital converter is connected to information processing means (20),such as a microprocessor, also comprising means for determining the treshold for each photodetector as a function of the illumination of a photodetector; means for transforming the above-specified differences into binary signals, by comparing the absolute values of these differences with the above-specified threshold; filter means for eliminating binary signals which are too small in size to correspond to a person and for obtaining a first result constituted by the binary signals which have not been eliminated; means for mutually comparing the first results successively provided over a determined time period in order to obtain an overall result corresponding to the movements of people; and means for determining the number of people present from the overall result.

9. A device according to claim 8, characterized in that the information processing means (22) also comprise means for mutually comparing the overall results obtained over different time periods.

10. A device according to claim 8 or 9, characterized in that the information processing means (22) comprise means for determining the frequency with which the photodetectors (16) are read as a function of the intensity of illumination in said space.

11. A device according to one of claims 8 to 10,characterized in that the information processing means (22) comprise means for recording the signals as read and digitized, said recording taking place at a frequency which is a submultiple of the photodetector (16) read frequency, and means for comparing and taking the difference between pairs of successively recorded signals which are separated from each other by a determined number of recorded signals.

12. A device according to one of claims 8 to 11, characterized in that it is associated with a television set in order to determine the number of people watching the set, or with a premises surveillance system.

13. A device according to one of claims 8 to 12, characterized in that the set of photodetectors (16) is a linear strip of photodetectors.

## Patentansprüche

1. Verfahren zum Bestimmen der Anzahl von in einem bestimmten Raum anwesenden Personen, welches aufweist: Aufnehmen eines Bildes dieses Raums mittels einer Anordnung (14) von Photodetektoren (16), Abtasten der von jedem Photodetektor gelieferten Grauwerte mit einer bestimmten Abtastfrequenz, untereinander Vergleichen der Grauwerte jedes Photodetektors zweier aufeinanderfolgender Bilder, um ihre Differenz zu erhalten, und Vergleichen dieser Differenzen mit einer Schwelle, **dadurch gekennzeichnet, daß** es folgendes aufweist: Bestimmen des Wertes der Schwelle für jeden Photodetektor in Abhängigkeit von der Beleuchtung dieses Photodetektors, Transformieren der vorgenannten Differenzen in binäre Signale durch Gleichrichten und Vergleichen mit den bereits genannten Schwellen, Eliminieren der binären Signale, deren Wert zu gering ist, um einer Person zugeordnet werden zu können, wobei die nicht eliminierten Signale ein erstes Resultat bilden, untereinander Vergleichen der erhaltenen ersten Resultate über eine vorbestimmte Zeitperiode, um für die Anordnung ein Resultat zu erhalten, das den Bewegungen der Personen entspricht, und Ableiten der Anzahl von Personen, die in diesem Raum anwesend sind.

2. Verfahren nach Anspruch 1, **dadurch gekennzeichnet, daß** ebenso die über unterschiedliche Zeitperioden gewonnenen Resultate der Anordnung untereinander verglichen werden.

3. Verfahren nach Anspruch 1 oder 2, **dadurch gekennzeichnet, daß** die Abtastfrequenz der Photodetektoren (16) in Abhängigkeit von der Beleuchtungsintensität des Raums verändert wird, um für jedes Bild einen Grauwert zu erhalten, der im wesentlichen unabhängig von der Beleuchtung ist.

4. Verfahren nach einem der vorigen Ansprüche, **dadurch gekennzeichnet, daß** die genannten Bilder mit einer Frequenz aufgezeichnet werden, durch welche die Abtastfrequenz teilbar ist, und zwei aufeinanderfolgende Bilder verglichen werden, die eine vorbestimmte Anzahl aufgenommener Bilder voneinander getrennt sind, um die genannten Differenzen von Grauwerten zu erhalten.

5. Verfahren nach Anspruch 4, **dadurch gekennzeichnet, daß** die Aufnahmefrequenz der Bilder und/oder die Anzahl der Bilder, durch welche zwei zu vergleichende Bilder voneinander getrennt sind, in Abhängigkeit von der Geschwindigkeit der Ortsveränderung einer Person in diesem Raum variiert wird

6. Verfahren nach einem der Ansprüche 1 bis 5, **dadurch gekennzeichnet, daß** die binären Signale gefiltert werden, um die Signale zu eliminieren, deren Wert zu gering ist, um einer Person zugeordnet werden zu können.

7. Verfahren nach einem der vorigen Ansprüche, **dadurch gekennzeichnet, daß** es zur Bestimmung der Anzahl fernsehender Personen oder zur Raumüberwachung verwendet wird.

8. Vorrichtung zum Bestimmen der Anzahl in einem bestimmten Raum anwesender Personen, die aufweist: ein Objektiv (10) zum Aufnehmen eines Bildes dieses Raums mittels einer Anordnung (14) von Photodetektoren (16) und Steuer- und Abtastschaltungen (18) für Photodetektoren, die über einen Analog/Digitalwandler (20) mit Mitteln zum Bilden von Differenzen zwischen den von den Photodetektoren in zwei aufeinanderfolgenden Bildern gelieferten Signalen und zum Vergleich dieser Differenzen mit einer Schwelle verbunden sind, **dadurch gekennzeichnet, daß** der Analog/Digitalwandler (20) mit Mitteln zur Informationsverarbeitung (22), wie einem Mikrorechner, verbunden ist, welche aufweisen: Mittel zum Bestimmen einer Schwelle für jeden Photodetektor in Abhängigkeit von der Beleuchtung des Photodetektors, Mittel zum Transformieren der genannten binären Differenzen durch Vergleich der Absolutwerte dieser Differenzen mit den genannten Schwellen, Filtermittel zum Eliminieren der Signale, deren Wert zu gering ist, um einer Person zugeordnet werden zu können, und zum Erhalten eines erstes Resultates, das aus den nicht elimierten binären Signalen besteht, Mittel, um die innerhalb einer vorbestimmten Zeitperiode aufeinanderfolgenden ersten Resultate untereinander zu vergleichen, um ein Resultat für die Anordnung zu erhalten, das den Bewegungen der Personen entspricht, und Mittel zum Bestimmen der Anzahl von anwesenden Personen aus dem Resultat für die Anordnung.

9. Vorrichtung nach Anspruch 8, **dadurch gekennzeichnet, daß** die Mittel zur Informationsverarbeitung (22) ebenso Mittel aufweisen, um die über unterschiedliche Zeitperioden für die Anordnung erhaltenen Resultate untereinander zu vergleichen.

10. Vorrichtung nach Anspruch 8 oder 9, **dadurch gekennzeichnet, daß** die Mittel zur Informationsverarbeitung (22) Mittel zum Bestimmen der Abtastfrequenz der Photodetektoren (16) in Abhängigkeit von der Beleuchtungsintensität des Raums aufweisen.

11. Vorrichtung nach einem der Ansprüche 8 bis 10, **dadurch gekennzeichnet, daß** die Mittel zur Informationsverarbeitung (22) aufweisen: Mittel zum Aufzeichnen von abgetasteten numerischen Signalen mit einer Frequenz, durch welche die Abtastfrequenz der Photodetektoren (16) teilbar ist, und Mittel zum Vergleichen von zwei und zwei aufeinanderfolgend aufgezeichneten Signalen, die voneinander um eine bestimmte Anzahl aufgezeichneter Signale voneinander getrennt sind, und zum Bilden ihrer Differenz.

12. Vorrichtung nach einem der Ansprüche 8 bis 11, **dadurch gekennzeichnet, daß** sie einem Fernsehgerät zugeordnet ist, um die Anzahl fernsehender Personen zu bestimmen, oder mit einem Überwachungssystem für Räume in Verbindung steht.

13. Vorrichtung nach einem der Ansprüche 8 bis 12, **dadurch gekennzeichnet, daß** die Anordnung von Photodetektoren (16) eine Leiste ist, die eine Photodetektorenreihe aufweist.
